# EUROPÄISCHE PATENTSCHRIFT

(11) **EP 1 596 108 B1**
(45) Veröffentlichungstag und Bekanntmachung des Hinweises auf die Patenterteilung: **23.12.2009**
(21) Anmeldenummer: 05010162.5
(22) Anmeldetag: 10.05.2005
(51) Int. Cl.: F16K 7/12, F16K 11/20

(54) **Ventilkörper**
Valve body
Corps de soupape

(30) Priorität: 12.05.2004 DE 202004007628 U
(43) Veröffentlichungstag der Anmeldung: 16.11.2005
(73) Patentinhaber: GEMÜ Gebrüder Müller Apparatebau GmbH & Co. KG, 74653 Ingelfingen (DE)
(72) Erfinder: Müller, Fritz, 74665 Ingelfingen (DE)
(74) Vertreter: Dreiss

(56) Entgegenhaltungen:
- EP-A- 0 618 389
- US-A- 5 755 155
- US-A- 6 024 123
- US-B1- 6 397 887
- US-B1- 6 401 756

## Beschreibung

Die Erfindung betrifft einen Ventilkörper mit einer Durchgangsleitung mit den Merkmalen des Oberbegriffs des Anspruchs 1.

Wenn ein derartiger Ventilkörper für durchströmende Medien eingesetzt wird, wird eine von der Durchgangsleitung abgehende Zweigleitung vorgesehen, in welcher ein zweites Ventil mit einem zweiten stegförmigen Ventilsitz eingebaut ist, über welches sich dann eine Probe, Dampf oder Kondensat aus dem System ableiten lässt. Diese Abzweigleitung wurde hierbei an den Ventilkörper angeschweißt, so dass im produktführenden Bereich eine Schweißnaht vorhanden ist. Insbesondere ergibt sich aber auch bei einer solchen Auslegung ein großer Totraum zwischen dem zweiten stegförmigen Ventilsitz und dem ersten stegförmigen Ventilsitz aufgrund der dazwischen vorgesehenen und angeschweißten Abzweigleitung. Bei empfindlichen und zu Kontaminierungen neigenden Durchgangsmedien, insbesondere in der Lebensmittelindustrie und der pharmazeutischen Industrie, sind einerseits wegen der Kontaminierungsgefahr Toträume unerwünscht, und andererseits bereitet die Erstellung der entsprechenden Schweißnähte an Ort und Stelle Schwierigkeiten. Auch ist es aus Sicherheitsgründen häufig erwünscht, möglichst keine Schweißnähte im produktführenden Bereich zu haben.

Aus der US 6,401,756 B1 ist ein Ventilkörper mit zwei integrierten Ventilen bekannt, wobei mit dem ersten Ventil eine Durchgangsleitung und mit dem zweiten Ventil eine Abzweigleitung absperrbar sind.

Die Erfindung zielt daher darauf ab, einen Ventilkörper für ein Membranventil der vorstehend genannten Art bereitzustellen, welcher äußerst totraumarm und ohne Schweißnähte auf effektive und kostengünstige Weise eine Ableitung einer Probe, Dampf oder Kondensat, gestattet. Außerdem soll der Ventilkörper einen kleinen Bauraum aufweisen und die Betätigungseinrichtung für das zweite Ventil leicht für eine Bedienungsperson zugänglich sein.

Diese Aufgabe wird erfindungsgemäß mit einem Ventilkörper gelöst, der die Merkmale des Anspruchs 1 aufweist.

Bei dem erfindungsgemäßen Ventilkörper ist somit ein zweites Membranventil mit einem stegförmigen Ventilsitz unmittelbar integriert, und zwar auch einschließlich der kommunizierenden Verbindung mit der Durchgangsleitung, so dass bei dem erfindungsgemäßen Ventilkörper die Abzweigleitung von dem zweiten im Ventilkörper integrierten Ventil direkt abgeht. Da sich bei einer solchen integrierten Ausgestaltung bei dem Ventilkörper die beiden stegförmigen Ventilsitze mit äußerst geringem Abstand zueinander anordnen lassen, lässt sich der Totraum zwischen den beiden Ventilen sehr stark reduzieren, so dass man auf diese Weise die Kontaminierungsgefahr äußerst stark einschränken kann. Ferner entfallen auch Schweißnähte im produktführenden Bereich, da die kommunizierende Verbindung zwischen der Durchgangsleitung und der Abzweigleitung ebenfalls unmittelbar im Ventilkörper integriert und in demselben ausgebildet ist. Zudem nimmt der erfindungsgemäße Ventilkörper auch relativ wenig Bauraum in Anspruch, und das zweite Ventil lässt sich in dem Ventilkörper an einer solchen Stelle anordnen, dass die Betätigungseinrichtung für das zweite Ventil leicht für eine Bedienungsperson zugänglich ist. Die Betätigung des ersten und/oder des zweiten Ventils kann manuell, pneumatisch oder elektronisch gesteuert erfolgen.

Auch gestattet die monolitische Auslegung beider Ventile in einem einzigen Ventilkörper eine bessere Qualitätskontrolle für die hergestellten Erzeugnisse, da man keine Schweißverbindungen benötigt.

Vorzugsweise ist beim erfindungsgemäßen Ventilkörper die Verbindung zwischen der Durchgangsleitung über den zweiten Ventilsitz zu der Abzweigleitung ebenfalls im Ventilkörper selbst ausgebildet, um eine möglichst gedrängte Bauweise zu erhalten und ohne zusätzliche Schweißverbindungen auszukommen.

Das zweite Ventil dient vorzugsweise zur Ableitung einer Probe, von Dampf oder Kondensat.

Vorzugsweise ist der Ventilkörper in Form eines Vollmaterialkörpers oder in Form eines Schmiedekörpers ausgelegt.

Zusammenfassend ist es bei dem erfindungsgemäßen Ventilkörper wesentlich, dass in demselben zwei für unterschiedliche Zwecke bestimmte Ventilsitze für zwei Membranventile integriert sind, welche intern über eine ebenfalls im Ventilkörper ausgebildete kommunizierende Verbindung mit der Durchgangsleitung in Verbindung stehen.

Die Erfindung wird nachstehend an Hand einer bevorzugten Ausführungsform unter Bezugnahme auf die beigefügte Zeichnung näher erläutert. In der Zeichnung gilt:
- Fig. 1: ist eine schematische, perspektivische Ansicht einer bevorzugten Ausführungsform eines Ventilkörpers nach der Erfindung; und
- Fig. 2: ist eine vergrößerte, perspektivische Ansicht eines Ausschnittbereichs des Ventilkörpers zur Verdeutlichung der Zuordnung und der Verbindung der beiden im Ventilkörper integrierten Ventilsitze.

In den Figuren der Zeichnung sind gleiche oder ähnliche Teile mit denselben Bezugszeichen versehen.

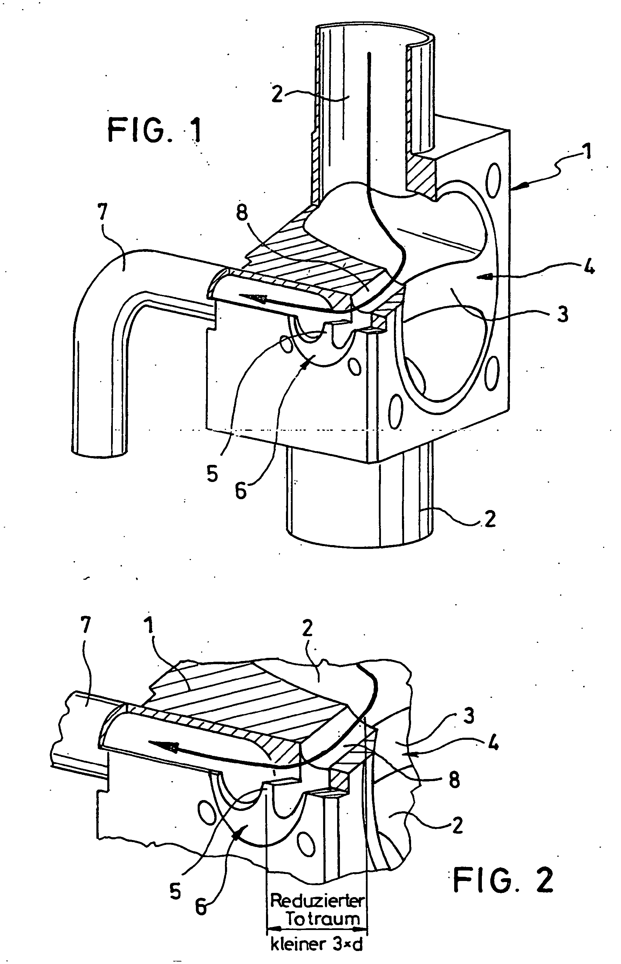

Wie aus den Figuren 1 und 2 zu ersehen ist, weist ein insgesamt mit 1 bezeichneter Ventilkörper eine Durchgangsleitung 2 auf. Im Bereich dieser Durchgangsleitung 2 ist ein erster, stegförmiger Ventilsitz 3 ausgebildet, welcher in Verbindung mit einer nicht näher dargestellten Membrane als Ventilelement ein erstes Ventil 4 bildet. Im geschlossenen Zustand des ersten Ventils 4, d.h. wenn die nicht gezeigte Membrane dicht gegen den ersten stegförmigen Ventilsitz 3 anliegt, ist die Durchgangsleitung 2 abgesperrt. Dieses erste Ventil oder Hauptventil 4 ist derart ausgelegt, daß es sich bei im wesentlichen horizontalem Einbau und entsprechender Ausrichtung des ersten Ventilsitzes 3 nach Maßgabe eines beispielsweise im Bereich von vorzugsweise 2° bis 4° vorgegebenen Gefälles entleert.

In dem Ventilkörper 1 ist ferner ein zweiter stegförmiger Ventilsitz 5 ausgebildet, welcher in Verbindung mit einer nicht näher dargestellten zweiten Membrane als Ventilelement ein zweites Ventil 6 bildet. Von diesem zweiten Ventil 6 geht eine Abzweigleitung 7 ab. Der stromauf von dem ersten Ventilsitz 3 liegende Bereich der Durchgangsleitung 2 ist kommunizierend mit dem zweiten Ventil 6 über einen Verbindungskanal 8 verbunden, welcher ebenfalls in dem Ventilkörper 1 integriert und unmittelbar in diesem ausgebildet ist. Diese Anordnung der beiden Ventile 4 und 6 mit ihren Ventilsitzen 3 und 5 ist auch in der vergrößerten Ansicht nach Figur 2 verdeutlicht. Mit einem Pfeil ist in beiden Figuren der Zeichnung der Strömungsverlauf bei geschlossenem ersten Ventil 4 und geöffnetem zweiten Ventil 6 verdeutlicht. Das zweite Ventil 6 kann bei dem erfindungsgemäßen Ventilkörper 1 als integriertes Probenahmeventil, integriertes Dampfventil oder integriertes Kondensatventil dienen.

Wie aus Figur 2 zu ersehen ist, ergibt sich bei der erfindungsgemäßen integrierten Lösung ein reduzierter Totraum zwischen den beiden Ventilsitzen 3 und 5 über den Verbindungskanal 8 zwischen der Durchgangsleitung 2 und dem zweiten Ventil 6. Dieser reduzierte Totraum ist äußerst vorteilhaft bei zu Kontaminierungen neigenden, durchzuleitenden Medien, die beispielsweise auf dem Gebiet der Lebensmittelindustrie und der Pharmaindustrie auftreten.

Der erfindungsgemäße Ventilkörper 1 kann mit der Durchgangsleitung 2 etwa vertikal ausgerichtet oder etwa horizontal ausgerichtet oder unter einem geringfügigen Neigungswinkel zur vertikalen und/oder horizontalen Ebene im Einsatzzustand eingebaut werden. Durch die integrierte Ausbildung des Verbindungskanals 8 in dem Ventilkörper 1 werden für die kommunizierende Verbindung von Durchgangsleitung und zweitem Ventil 6 keine Schweißverbindungen benötigt, so dass auch die Funktionssicherheit eines solchen Ventilkörpers wesentlich verbessert ist.

Beim bestimmungsgemäßen Einsatz des Ventilkörpers 1 kann im offenen Zustand des ersten Ventils 4, wenn also die nicht dargestellte und als Ventilelement dienende Membrane vom ersten stegförmigen Ventilsitz 3 abgehoben ist, durch die Durchgangsleitung 2 beispielsweise, wie in der Zeichnung dargestellt, von oben nach unten strömen. Im Falle einer Probenahme, oder wenn Dampf und/oder Kondensat abgelassen werden soll, wird das erste Ventil 4 geschlossen, wobei die nicht dargestellte Membrane dicht sitzend zur Anlage gegen den ersten stegförmigen Ventilsitz 3 kommt. Somit kann Medium aus der Durchgangsleitung 2 über den Verbindungskanal 8 zu dem zweiten Ventil 6 mit dem zugeordneten zweiten stegförmigen Ventilsitz 5 strömen. Wenn das zweite Ventil 6 dann geöffnet wird, und die nicht näher dargestellte und als Ventilelement dienende Membrane vom zweiten stegförmigen Ventilsitz 5 abgehoben ist, gelangt dann das Medium von der Durchgangsleitung 2 über den Verbindungskanal 8 zu der Abzweigleitung 7, so dass hierüber eine Probe entnommen werden kann sowie gegebenenfalls Dampf und/oder Kondensat aus dem Leitungssystem abgeleitet werden kann.

Die Erfindung ist natürlich nicht auf die in der Zeichnung dargestellten Einzelheiten hinsichtlich Größe und geometrische Anordnung beschränkt, sondern es sind zahlreiche Abänderungen und Modifikationen möglich, und einige der Anordnungen hängen auch von der Einbaulage sowie der Größe und der geometrischen Gestalt der vorzusehenden Ventilsitze ab.

## Patentansprüche

1. Ventilkörper (1) mit einer Durchgangsleitung (2) mit einem ersten Ventil (4) mit einem ersten stegförmigen Ventilsitz (3), welcher derart ausgelegt ist, dass gegen denselben eine als Ventilelement dienende Membrane zur Anlage kommen kann, wobei ein zweites Ventil (6) mit einem zweiten stegförmigen Ventilsitz (5) für eine zweite als Ventilelement dienende Membrane im Ventilkörper (1) derart ausgebildet ist, dass eine kommunizierende Verbindung (8) mit der Durchgangsleitung (2) stromauf von dem ersten Ventilsitz (3) und einer Abzweigleitung (7) herstellbar ist, **dadurch gekennzeichnet, dass** die Abzweigleitung (7) auf der dem ersten Ventil (4) gegenüber liegenden Seite des Ventilkörpers (1) aus diesem ausmündet und dass der Ventilkörper (1) zwei aneinander angrenzende, unter einem Winkel stehende Seitenflächen aufweist, über welche die Ventilsitze (3 und 5) zugänglich sind, so dass jeweils eine als Ventilelement ausgebildete Membrane an diesen zur Anlage kommen kann.

2. Ventilkörper(1) nach Anspruch 1, **dadurch gekennzeichnet, dass** die Verbindung zwischen der Durchgangsleitung (2) über den zweiten Ventilsitz (5) zu der Abzweigleitung (7) im Ventilkörper (1) in Form eines Verbindungskanals (8) ausgebildet ist.

3. Ventilkörper (1) nach Anspruch 1 oder 2, **dadurch gekennzeichnet, dass** der Ventilkörper (1) als Vollmaterialkörper oder als Schmiedekörper ausgebildet ist.

4. Ventilkörper (1) nach einem der vorangehenden Ansprüche, **dadurch gekennzeichnet, dass** das zweite Ventil (6) über die Abzweigleitung (7) die Ausleitung einer Probe, von Dampf und/oder Kondensat gestattet.

## Claims

1. A valve body (1) comprising a passageway (2) having a first valve (4) having a first landlike valve seat (3), constructed for interaction with a first valve element in the form of a diaphragm, wherein a second valve (6) having a second landlike valve seat (5) for a second diaphragm serving as a valve element in the valve body (1) is constructed such, that a communicating connection (8) with the passageway (2) is located upstream of the first valve seat (3) and a branch line (7) is producible, **characterized in that** the branch line (7) leads out of the side of the valve body (1) opposite to the first valve (4) and that the valve body (1) has two sides adjoining to each other with an angle and via which the valves ( 3 and 5) are accessible, so that a membrane serving as a valve element is attachable to each one of it.

2. The valve body (1) of claim 1, **characterized in that** the connection between the passageway (2) via the second valve seat (5) to the branch line (7) in the valve body (1) is constructed in the form of a connection channel (8).

3. The valve body (1) of claim 1 or 2, **characterized in that** the valve body (1) is made in the form of a solid material body or in the form of a forged body.

4. The valve body (1) of one of the preceding claims, **characterized in that** the secondary valve (6) is constructed to allow extraction of a sample, of steam and/or condensate via the branch line (7).

## Revendications

1. Corps de soupape (1) comportant une conduite traversante (2) avec une première soupape (4) avec un premier siège de soupape (3) en forme d'entretoise, siège de soupape conçu de manière qu'une membrane servant d'élément de soupape peut venir en appui contre lui, une seconde soupape (6) avec un second siège de soupape (5) en forme d'entretoise pour une seconde membrane servant d'élément de soupape étant conçue, dans le corps de soupape (1), de manière qu'une liaison communicante (8) peut être établie entre la conduite traversante (2) en amont du premier siège de soupape (3) et une conduite dérivée (7), **caractérisé en ce que** la conduite dérivée (7) débouche du corps de soupape (1) sur le côté opposé à la première soupape (4) de celui-ci et **en ce que** le corps de soupape (1) présente deux surfaces latérales adjacentes formant un angle entre elles, surfaces latérales, par l'intermédiaire desquelles les sièges de soupape (3 et 5) sont accessibles, de sorte que respectivement une membrane conçue comme élément de soupape peut venir en appui contre ceux-ci.

2. Corps de soupape (1) suivant la revendication 1, **caractérisé en ce que** la liaison entre la conduite traversante (2) en passant par le second siège de soupape (5) à la conduite dérivée (7) dans le corps de soupape (1) est conçue en forme de canal de liaison (8).

3. Corps de soupape (1) suivant la revendication 1 ou 2, **caractérisé en ce que** le corps de soupape (1) est conçu comme un corps en matériau plein ou comme un corps forgé.

4. Corps de soupape (1) suivant une des revendications précédentes, **caractérisé en ce que** la seconde soupape (6) permet le prélèvement d'un échantillon, de vapeur et/ou de condensat par l'intermédiaire de la conduite dérivée (7).
